# EUROPEAN PATENT APPLICATION

(11) **EP 4 379 354 A1**
(43) Date of publication of application: **05.06.2024**
(21) Application number: 22849451.4
(22) Date of filing: 25.07.2022
(51) Int. Cl.: G01N 21/3581, G02F 1/37

(54) **SUBSTANCE IDENTIFICATION DEVICE, SUBSTANCE IDENTIFICATION METHOD, AND TERAHERTZ LIGHT SOURCE**

(30) Priority: 27.07.2021 JP 2021122665
(71) Applicant: National University Corporation Shizuoka University, Shizuoka-shi, Shizuoka 422-8529 (JP); Shibaura Institute of Technology, Tokyo 135-8548 (JP)
(72) Inventor: SASAKI, Tetsuo, Hamamatsu-shi, Shizuoka 432-8561 (JP); TANABE, Tadao, Tokyo 135-8548 (JP)
(74) Representative: Berggren Oy
(86) International application number: PCT/JP2022/028669
(87) International publication number: WO 2023/008390

(57) **Abstract**

A substance identification device includes: an irradiation unit that irradiates an object with plural terahertz waves having different wavelengths at one time; a detection unit that detects the plural terahertz waves transmitted through the object or reflected by the object; and an identification unit that identifies a substance constituting the object from at least one of transmittance or reflectance for each of the plural terahertz waves.

## Description

### CROSS-REFERENCE TO RELATED APPLICATIONS

The disclosure of Japanese Patent Application No. 2021-122665 filed on July 27, 2021 is incorporated herein by reference in their entirety.

### Technical Field

The present invention relates to a substance identification device, a substance identification method, and a terahertz light source.

### Background Art

In recent years, export of waste plastics to overseas countries such as China has been restricted due to the revision of the International Convention. The use of fuels and landfills have been restricted by the government's policy goals such as achievement of 100% recycling of plastics or reduction of CO₂ emissions by 2035. For this reason, there is a great need to convert waste plastics discharged from general households and companies into recycled plastics. Due to an increase in nesting demand and use of mail-order sales due to the outbreak of the new coronavirus, waste plastics such as food trays and packaging are further increased, and the tightness of processing capacity of processing companies is also accelerated.

In order to recycle waste plastics, it is first necessary to sort the waste plastics for each material. In recent years, waste plastics include various types of plastics such as colored plastics and plastics containing additives, and it is difficult to sort the plastics. Conventionally, sorting methods such as visual sorting, sorting by combustion/odor, electrostatic sorting, and specific gravity sorting have been used for sorting waste plastics. However, in the conventional sorting method, it is extremely difficult to accurately sort waste plastics having a complicated composition. For this reason, the conversion to recycled plastic has not progressed, and the processing capacity of the processing company is further tightened.

In recent years, it has been studied to apply a technique related to optical identification of a substance using infrared light, near infrared light, and a terahertz wave to the sorting of waste plastic. For example, Japanese Patent Application Laid-Open (JP-A) No. 2015-83964 discloses an information acquisition device that acquires information of a specimen by irradiating the specimen disposed between a reflection member having a reflection surface that reflects a terahertz wave and a plate-like member with the terahertz wave via the plate-like member.

### SUMMARY OF INVENTION

### Technical Problem

Also in the technique described in Japanese Patent Application Laid-Open (JP-A) No. 2015-83964, a pulsed terahertz wave is used to acquire information of a specimen. An ultrashort pulse laser is unstable due to such factors as variation in pulse intensity. Therefore, an information acquisition device using an ultrashort pulse laser has a problem that it is difficult to acquire accurate information. In addition, ultrashort pulse lasers are expensive and large.

An object of the present disclosure is to provide a substance identification device and a substance identification method capable of identifying a plurality of substances at high speed and with high accuracy using a terahertz wave.

Another object of the present disclosure is to provide a terahertz light source capable of simultaneously generating a plurality of terahertz waves having different wavelengths. Solution to Problem

An object identification device of the present disclosure includes: an irradiation unit that irradiates an object with a plurality of terahertz waves having different wavelengths at one time; a detection unit that detects the plurality of terahertz waves transmitted through the object or reflected by the object; and an identification unit that identifies a substance constituting the object from at least one of transmittance or reflectance for each of the plurality of terahertz waves.

An object identification method of the present disclosure includes: irradiating an object with a plurality of terahertz waves having different wavelengths at one time; detecting the plurality of terahertz waves transmitted through the object or reflected by the object; and identifying a substance constituting the object from at least one of transmittance or reflectance for each of the plurality of terahertz waves.

A terahertz light source of the present disclosure includes: a plurality of non-linear optical crystals; and a plurality of fiber lasers having different oscillation wavelengths, in which a number of combinations in a case in which two fiber lasers are selected from the plurality of fiber lasers is equal to or larger than a number of the plurality of non-linear optical crystals, in which terahertz light source irradiates each of the plurality of non-linear optical crystals with two types of laser light beams having different wavelengths from fiber lasers of a corresponding combination, and simultaneously generates a plurality of terahertz waves having different wavelengths from the plurality of non-linear optical crystals.

### Advantageous Effects of Invention

According to the substance identification device and the substance identification method of the present invention, a plurality of substances can be identified at high speed and with high accuracy by simultaneously irradiating a plurality of terahertz waves having different wavelengths.

According to the terahertz light source of the present invention, a plurality of terahertz waves having different wavelengths can be simultaneously generated.

### BRIEF DESCRIPTION OF DRAWINGS

Fig. 1 is a schematic view illustrating an outline of object identification according to the present disclosure.
Fig. 2 is a schematic view illustrating an example of a configuration of an object identification device of the present disclosure.
Fig. 3 is a flowchart illustrating an example of a procedure of an object identification method of the disclosure.
Fig. 4 is a graph illustrating an example of a change in transmittance of plastic with respect to a frequency.
Fig. 5 is a schematic view illustrating an example of a plastic sorting method.
Fig. 6 is a graph illustrating another example of a change in transmittance of plastic with respect to a frequency.
Fig. 7 is a schematic view illustrating an example of a configuration of a terahertz light source of the present disclosure.
Fig. 8 is a schematic view illustrating another example of the configuration of the terahertz light source of the present disclosure.
Fig. 9 is a plan view illustrating still another example of the configuration of the terahertz light source of the present disclosure.
Fig. 10 is a side view of the terahertz light source illustrated in Fig. 9.
Fig. 11 is a schematic view illustrating a modification of the configuration of the object identification device of the present disclosure.
Fig. 12 is a schematic view illustrating another modification of the configuration of the object identification device of the present disclosure.
Fig. 13 is a schematic view illustrating an example of a configuration of an optical system other than a light source.
Fig. 14 is a schematic view illustrating another example of the configuration of the optical system other than the light source.
Fig. 15 is a schematic view illustrating another example of the configuration of the optical system other than the light source.
Fig. 16 is a schematic view illustrating another example of the configuration of the optical system other than the light source.
Fig. 17 is a schematic view illustrating another example of the configuration of the optical system other than the light source.

### DESCRIPTION OF EMBODIMENTS

Hereinafter, examples of embodiments of the present invention will be described in detail with reference to the drawings.

### <Outline of Obj ect Identification>

First, an outline of substance identification of the disclosure will be described.

In the substance identification of the present disclosure, an object is simultaneously irradiated with a plurality of terahertz waves having different wavelengths, a plurality of terahertz waves transmitted through the object or reflected by the object are detected, and a substance constituting the object is identified from at least one of transmittance or reflectance for each of the plurality of terahertz waves.

The terahertz wave has a frequency range between 100 GHz (gigahertz) and 10 THz (terahertz), which is in an intermediate frequency region between a radio wave and an optical wave. The terahertz wave is an electromagnetic wave having an intermediate property between a radio wave and an optical wave, and has both transparency like a radio wave and straight-line propagation properties like an optical wave. When a substance is irradiated with the terahertz wave, electromagnetic wave energy is absorbed by resonance of the terahertz wave with natural vibration of the substance, so that a spectrum specific to the substance (so-called fingerprint spectrum) can be obtained.

Each of the plurality of terahertz waves having different wavelengths is preferably a continuous wave. By using the continuous wave, the wavelength of the terahertz wave can be fixed, and the transmittance with respect to the terahertz wave of each wavelength can be obtained. Therefore, the type of the substance can be identified from the difference in transmittance of the terahertz wave of each wavelength, and the substance can be identified in a short time as compared with the case of comparing the spectral spectra with each other.

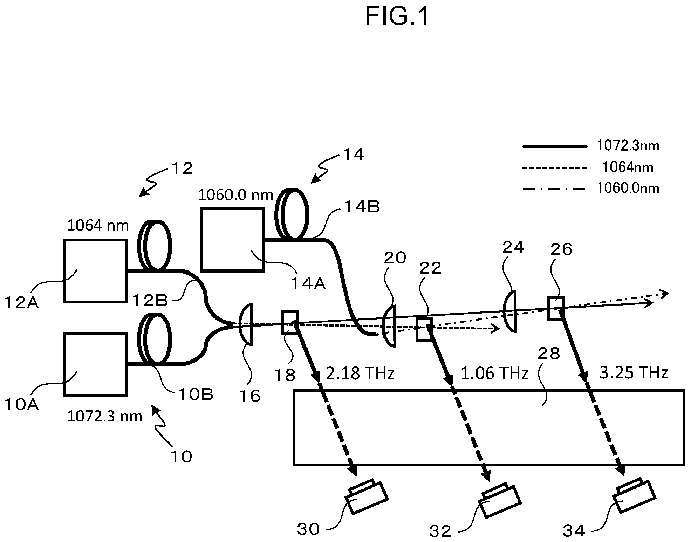

Fig. 1 is a schematic view illustrating an outline of substance identification according to the disclosure.

The terahertz wave can be generated by various methods, in the present embodiment, for example, a plurality of terahertz waves having different wavelengths are generated by a difference frequency generation method or the like using a terahertz light source including a plurality of fiber lasers 10, 12, and 14 having different oscillation wavelengths and a plurality of non-linear optical crystals 18, 22, and 26. In the present disclosure, the terahertz wave may be expressed as an optical wave, for example, a generation source of the terahertz wave is referred to as a "terahertz light source".

When a non-linear optical crystal 18 is irradiated with an excitation light from the fiber laser 10 and an excitation light from the fiber laser 12, a terahertz wave of 2.18 THz according to a difference frequency of the two types of excitation light beams is generated. Similarly, when the non-linear optical crystal 22 is irradiated with an excitation light from the fiber laser 12 and an excitation light from the fiber laser 14, a terahertz wave of 1.06 THz is generated, and when the non-linear optical crystal 26 is irradiated with an excitation light from the fiber laser 10 and an excitation light from the fiber laser 14, a terahertz wave of 3.25 THz is generated.

An object 28 is simultaneously irradiated with a plurality of terahertz waves. Each of the plurality of terahertz waves transmitted through the object 28 is detected by a detector corresponding to each wavelength among a plurality of detectors 30, 32, and 34. The transmittance of the terahertz wave of each wavelength is obtained from the intensity of the irradiated terahertz wave and the intensity of the detected terahertz wave. Since a transmission characteristic with respect to a terahertz wave varies depending on a type of a substance, a substance constituting an object can be identified from a difference in transmittance of the terahertz wave of each wavelength with respect to the object 28.

In a case where two types of excitation light beams having different wavelengths are required to generate one type of terahertz wave, in a simple calculation, six types of excitation light beams having different wavelengths are required to generate three types of terahertz waves. However, in the present embodiment, by generating three sets of combinations of two types of excitation light beams from three types of excitation light beams having different wavelengths, it is possible to generate three types of terahertz waves from three types of excitation light beams having different wavelengths.

That is, it is possible to obtain terahertz waves by the number of combinations from a limited number of fiber lasers. The number of combinations when selecting two types of excitation light beams from among three different types of excitation light beams is represented by ₃C₂, and the number of combinations is three. Similarly, since ₄C₂ = 6, six types of terahertz waves can be generated from four types of excitation light beams having different wavelengths, and since ₅C₂ = 10, ten types of terahertz waves can be generated from five types of excitation light beams having different wavelengths.

In the present embodiment, an example of using three types of terahertz waves will be described, but how many types of terahertz waves are used is determined according to the number of types of substances to be sorted. As the number of types of terahertz waves increases, more types of substances can be sorted.

In the present embodiment, a substance identification procedure based on a relative intensity of the transmittance will be described. However, the metric is not limited to the transmittance, and it is sufficient to acquire a tendency by measurement of the actual sample and select an optimum metric. For example, it may be substance identification based on the relative intensity of a transmitted light intensity or a reflected light intensity, substance identification based on a relative intensity of the transmittance or the reflectance, or substance identification based on comparison of an absorption coefficient calculated based on a film thickness measured in advance. For the measurement of the film thickness, a white light interferometry, a femtosecond laser passing time, or the like may be used.

Hereinafter, embodiments of the present invention will be described with an example in which an object is waste plastic and a type of the plastic constituting the object is identified.

### [First Embodiment]

### <Object Identification Device>

Next, a configuration of the object identification device will be described.

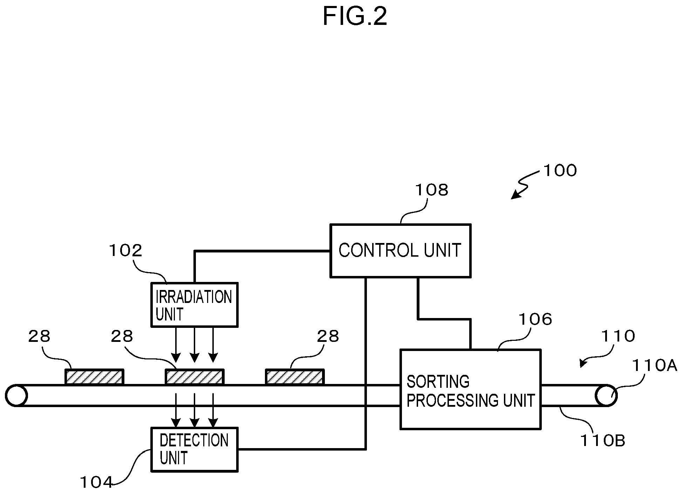

Fig. 2 is a schematic view illustrating an example of a configuration of the object identification device of the disclosure. An object identification device 100 is a device that identifies a type of a plastic material constituting an object 28. As illustrated in Fig. 2, the object identification device 100 includes an irradiation unit 102, a detection unit 104, a sorting processing unit 106, a control unit 108, and a conveyance device 110.

The irradiation unit 102 and the detection unit 104 are disposed so as to face each other across a conveyance path of the object 28. The conveyance device 110 is configured to sequentially convey the plurality of objects 28 to a predetermined position between the irradiation unit 102 and the detection unit 104. The sorting processing unit 106 is disposed downstream of the irradiation unit 102 and the detection unit 104 in a conveyance direction.

The conveyance device 110 is, for example, a belt conveyor or the like. The conveyance device 110 includes a pair of rollers 110A and a belt 110B. The rotation of the pair of rollers 110A moves the belt 110B in the conveyance direction. The pair of rollers 110A are driven by a motor (not illustrated), and the motor (not illustrated) is controlled by the control unit 108. The belt 110B is made of a material having high transparency to terahertz waves. Examples of such a material include plastics such as polytetrafluoroethylene, polypropylene, or polycarbonate.

The irradiation unit 102 includes a terahertz light source to be described later, and simultaneously irradiates the object 28 with a plurality of terahertz waves having different wavelengths generated by the terahertz light source.

The detection unit 104 includes a plurality of detectors and detects intensities of the plurality of terahertz waves transmitted through the object 28. The plurality of detectors are provided corresponding to the plurality of terahertz waves having different wavelengths, and each detects an intensity of a terahertz wave having a corresponding wavelength (see Fig. 1). As the plurality of detectors, for example, a deuterium tri-glycine sulfate [DTGS] detector can be used. The DTGS detector is a pyroelectric photodetector in which hydrogen atoms of triglycine sulfate are substituted with deuterium.

The control unit 108 includes an information processing device (computer) including a CPU, a ROM, a RAM, and a memory, and controls each unit of the device and performs various calculations. For example, the control unit 108 stores the intensity of the terahertz wave to be irradiated (hereinafter, referred to as "irradiation intensity") in the memory. When acquiring the intensity of the terahertz wave detected by the detection unit 104 (hereinafter, referred to as "detection intensity"), the control unit 108 reads the irradiation intensity of the terahertz wave from the memory, and calculates transmittance of the terahertz wave from the irradiation intensity and the detection intensity. The control unit 108 identifies a type of plastic by using the transmittance of the terahertz wave of each wavelength with respect to the object 28. That is, the control unit 108 corresponds to an "identification unit" of the present invention.

The sorting processing unit 106 is a sorting mechanism or the like. The sorting processing unit 106 sorts the object 28 for each type of a plastic material based on the identification result obtained by the control unit 108.

### (Operation of Object Identification Device)

Next, an operation of the object identification device, that is, a procedure of an object identification method will be described.

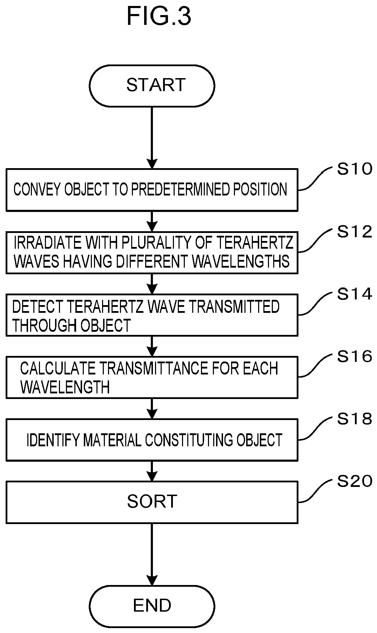

Fig. 3 is a flowchart illustrating an example of a procedure of the object identification method of the disclosure.

First, the conveyance device 110 conveys the object 28 to a predetermined position (step S10). Next, the irradiation unit 102 generates a plurality of terahertz waves having different wavelengths, and simultaneously irradiates the object 28 with the terahertz waves (step S12). Next, the detection unit 104 detects the plurality of terahertz waves transmitted through the object 28 (step S14).

Next, transmittance of the terahertz wave of each wavelength is calculated by the control unit 108 (step S16). Next, the control unit 108 identifies a type of a plastic material constituting the object 28 using the calculated transmittance (step S18). Next, the sorting processing unit 106 sorts the object 28 based on the identification result (step S18). These procedures are repeated for each object 28.

### (Substance Identification Based on Transmittance)

Here, a procedure for identifying a substance based on transmittance will be described with a specific example.

### -Specific Example 1-

Specific example 1 is an example of identification of four types of plastics, that is, polyethylene terephthalate (PET), polypropylene (PP), polyethylene (PE), and polystyrene (PS).

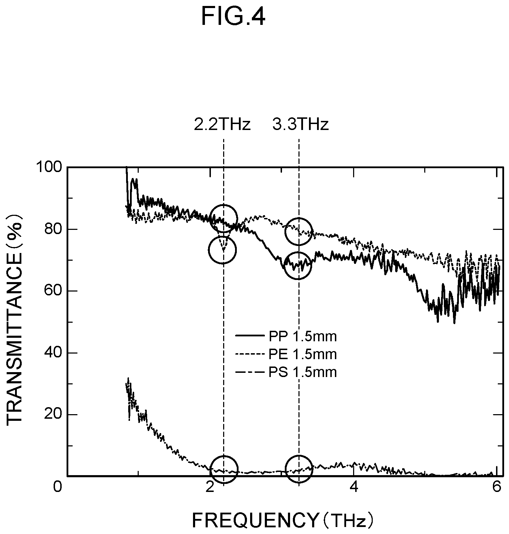

Fig. 4 is a graph illustrating an example of a change in transmittance of plastic with respect to a frequency. For each of a polypropylene flat plate having a thickness of 1.5 mm, a polyethylene flat plate having a thickness of 1.5 mm, and a polystyrene flat plate having a thickness of 1.5 mm, a change in transmittance with respect to a frequency of the terahertz wave is illustrated. Polypropylene is indicated by a solid line, polyethylene is indicated by a dotted line, and polystyrene is indicated by an alternate long and short dash line.

Spectral spectra of polypropylene, polyethylene, and polystyrene are significantly different. The transmittance with respect to a terahertz wave of 2.2 THz is about 83% for polypropylene, about 73% for polyethylene, and about 2% for polystyrene. The transmittance with respect to a terahertz wave of 3.3 THz is about 70% for polypropylene, about 80% for polyethylene, and about 3% for polystyrene. The transmittance with respect to a terahertz wave of 2.2 THz is higher for polypropylene than for polyethylene, and the transmittance with respect to a 3.3 THz terahertz wave is higher for polyethylene than for polypropylene. Although not illustrated, polyethylene terephthalate hardly transmits a terahertz wave.

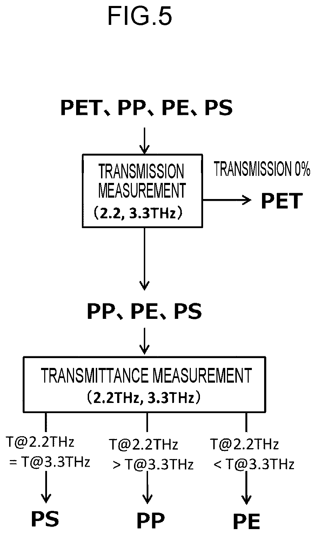

Fig. 5 is a schematic view illustrating an example of a plastic sorting method. As illustrated in Fig. 5, sorting is performed using two types of terahertz waves of 2.2 THz and 3.3 THz. In a first stage, an object that does not transmit terahertz waves of 2.2 THz and 3.3 THz is identified as polyethylene terephthalate. In a second stage, the transmittance with respect to a terahertz wave of 2.2 THz (T@2.2THz) is compared with the transmittance with respect to a terahertz wave of 3.3 THz (T@3.3THz).

An object of which T@2.2THz and T@3.3THz are comparable is identified as polystyrene. An object of which T@2.2THz is larger than T@3.3THz is identified as polyethylene. An object of which T@2.2THz is smaller than T@3.3THz is identified as polypropylene. In this way, four types of plastics can be identified.

A terahertz wave of 1.1 THz may be added to terahertz waves of 2.2 THz and 3.3 THz. When sorting is performed using three types of terahertz waves, higher identification performance can be obtained. Assuming that the transmittance with respect to terahertz wave of 1.1 THz is T@1.1THz, identification is performed on a more complicated basis, and the identification performance is improved, as described below.

An object satisfying T@1.1THz > T@2.2THz > T@3.3THz is identified as polypropylene. An object satisfying T@1.1THz ≈ T@3.3THz > T@2.2THz is identified as polyethylene. An object satisfying T@1.1THz > T@2.2THz ≈ T@3.3THz is identified as polystyrene. An object that does not transmit any terahertz wave is identified as polyethylene terephthalate.

### -Specific Example 2-

Specific example 2 is an example of identification of two types of plastics, polypropylene (PP) and polypropylene (PP + Talc) in which talc is blended. Polypropylene blended with talc as a reinforcing agent is used for food trays, or bumpers or interior parts of vehicles.

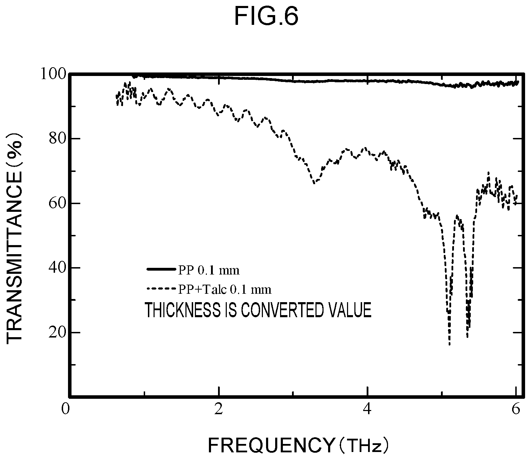

Fig. 6 is a graph illustrating another example of a change in transmittance of plastic with respect to a frequency. For each of the polypropylene sheet having a thickness of 0.1 mm and the polypropylene sheet blended with talc having a thickness of 0.1 mm, a change in transmittance with respect to a frequency of the terahertz wave is illustrated. Polypropylene is indicated by a solid line, and polypropylene blended with talc is indicated by a dotted line.

As illustrated in Fig. 6, for the polypropylene blended with talc, a spectrum of talc clearly appears in a frequency region of 4 THz to 6 THz. Therefore, from the transmittance with respect to a terahertz wave of a specific wavelength in the frequency region of 4 THz to 6 THz, polypropylene in which talc is blended can be identified, and talc can also be quantified and distribution of talc can also be examined.

### <Terahertz Light Source>

Next, a terahertz light source constituting the irradiation unit 102 in Fig. 2 will be described.

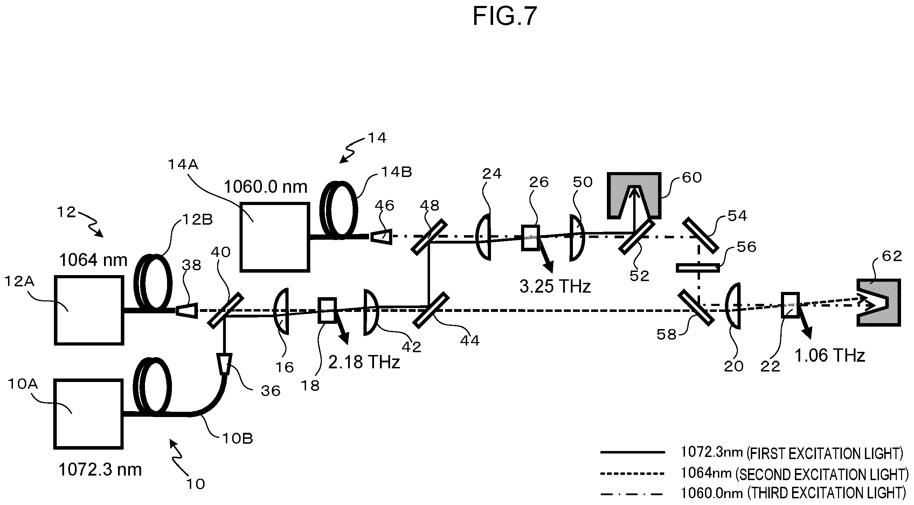

Fig. 7 is a schematic view illustrating an example of a configuration of a terahertz light source of the present disclosure. As illustrated in Fig. 7, the terahertz light source includes fiber lasers 10, 12, and 14, non-linear optical crystals 18, 22, and 26, lenses 16, 20, 24, 42, and 50, beam splitters 40, 44, 48, 52, and 58, a mirror 54, a half-wave plate 56, collimators 36, 38, and 46, and dampers 60 and 62.

The fiber laser 10 includes an excitation light source 10A and an amplification optical fiber 10B in which rare earth is added to a core. The laser light beam emitted from the excitation light source 10A enters the optical fiber 10B, propagates through the optical fiber 10B while being amplified, and oscillates at a predetermined wavelength. Similarly, the fiber laser 12 includes an excitation light source 12A and an optical fiber 12B, and the fiber laser 14 includes an excitation light source 14A and an optical fiber 14B.

Examples of the non-linear optical crystals 18, 22, and 26 include a GaP crystal, a GaSe crystal, a ZnGeP₂ crystal, a LiNbO₃ crystal, and a CdSe crystal. In the terahertz light source of the present disclosure, a non-linear optical crystal having small absorption with respect to excitation light is preferable, and a GaP crystal is most preferable among the exemplified non-linear optical crystals. By using the GaP crystal as the non-linear optical crystals 18, 22, and 26, the excitation light is hardly absorbed and is transmitted through the non-linear optical crystal, and the transmitted excitation light can be reused with high efficiency, as described later.

The lenses 16, 20, and 24 disposed on the upstream side of the non-linear optical crystal are condenser lenses, and focus two types of excitation light beams into the non-linear optical crystal. In the case of a non-linear optical crystal having optical isotropy such as a GaP crystal or a LiNbOs crystal, a terahertz wave is generated by generation of a difference frequency due to angular phase matching. Phase matching is achieved by imparting a slight angle between the two types of excitation light beams by the lenses 16, 20, and 24, and causing the two types of excitation light beams to enter the non-linear optical crystal.

The lenses 42 and 50 disposed on the downstream side of the non-linear optical crystal are also condenser lenses. The lens 42 is paired with the lens 16, and the lens 50 is paired with the lens 24. These pairs of lenses focus the excitation light transmitted through the non-linear optical crystal by their symmetrical lens arrangement to reduce the spread of the beam.

The beam splitters 40, 44, 48, 52, and 58 transmit one of the two types of incident excitation light beams, and reflect the other, and separate the two types of incident excitation light beams into each excitation light beam. In this example, the two types of incident laser light beams are different not only in wavelength but also in polarization direction. The beam splitters 40, 44, 48, 52, and 58 are polarization beam splitters, and transmit one of two incident excitation light beams having different wavelengths and polarization directions, reflect the other, and separate the two incident excitation light beams having different wavelengths and polarization directions.

The half-wave plate 56 is a wave plate that gives an optical path difference of half wavelength between orthogonal linearly polarized components, and rotates the polarization direction of the incident excitation light by 90°.

The collimators 36, 38, and 46 are fiber-connected collimator lenses that convert light emitted from an optical fiber into parallel light and cause the parallel light to enter the optical fiber. The dampers 60 and 62 are attenuators that guide unnecessary light to the inside and attenuate it.

Next, an operation of the terahertz light source will be described.

Here, the excitation light from the fiber laser 10 is referred to as "first excitation light", and is indicated by a solid line in each drawing. The excitation light from the fiber laser 12 is referred to as "second excitation light" and is indicated by a dotted line in each drawing. The excitation light from the fiber laser 14 is referred to as "third excitation light" and is indicated by an alternate long and short dash line in each drawing. In this example, a wavelength of the first excitation light is 1072.3 nm, a wavelength of the second excitation light is 1064 nm, and a wavelength of the third excitation light is 1060.0 nm.

The first excitation light emitted from one end of the optical fiber 10B of the fiber laser 10 is collimated by the collimator 36, enters the beam splitter 40, is reflected by the beam splitter 40, and enters the lens 16. In this regard, the second excitation light emitted from one end of the optical fiber 12B of the fiber laser 12 is collimated by the collimator 38, enters the beam splitter 40, transmitted through the beam splitter 40, and enters the lens 16.

The first excitation light and the second excitation light are focused into the non-linear optical crystal 18 by the lens 16. At this time, the first excitation light and the second excitation light intersect with each other at a slight angle in the non-linear optical crystal 18 by the lens 16. When the non-linear optical crystal 18 is irradiated with the first excitation light and the second excitation light having different wavelengths, a first terahertz wave corresponding to a difference frequency between the first excitation light and the second excitation light is generated. In this example, a wavelength of the first terahertz wave is 2.18 THz.

The first excitation light and the second excitation light transmitted through the non-linear optical crystal 18 are focused by the lens 42 and enter the beam splitter 44. The first excitation light is reflected by the beam splitter 44 and enters the beam splitter 48, and is reflected by the beam splitter 48 and enters the lens 24. The second excitation light is transmitted through beam splitter 44 and enters the beam splitter 58, and is transmitted through the beam splitter 58 and enters the lens 20.

Since the non-linear optical crystal hardly absorbs the excitation light, the first excitation light transmitted through the non-linear optical crystal 18 is reused for the excitation of another non-linear optical crystal 26, and the second excitation light transmitted through the non-linear optical crystal 18 is reused for the excitation of another non-linear optical crystal 22.

The third excitation light emitted from one end of the optical fiber 14B of the fiber laser 14 is collimated by the collimator 46, enters the beam splitter 48, transmitted through the beam splitter 48, and enters the lens 24. The first excitation light and the third excitation light are focused into the non-linear optical crystal 26 by the lens 24. When the non-linear optical crystal 26 is irradiated with the first excitation light and the third excitation light having different wavelengths, a second terahertz wave corresponding to a difference frequency between the first excitation light and the third excitation light is generated. In this example, a wavelength of the second terahertz wave is 3.25 THz.

The first excitation light and the third excitation light transmitted through the non-linear optical crystal 26 are focused by the lens 50 and enter the beam splitter 52. The first excitation light is reflected by the beam splitter 52, enters the damper 60, and is attenuated in the damper 60. The third excitation light is transmitted through the beam splitter 52 and enters the mirror 54, is reflected by the mirror 54, and the optical path is bent. The third excitation light reflected by the mirror 54, transmitted through the half-wave plate 56, enters the beam splitter 58, is reflected by the beam splitter 58, and enters the lens 20.

For example, when the first excitation light is S-polarized light, the second excitation light is P-polarized light, and the third excitation light is P-polarized light, two types of excitation light beams having different polarization directions can be separated, but the second excitation light and the third excitation light are the same P-polarized light beams and cannot be separated by the beam splitter 58. Therefore, the third excitation light is converted from the P-polarized light to the S-polarized light by the half-wave plate 56, so that they can be separated by the beam splitter 58.

The second excitation light and the third excitation light are focused into the non-linear optical crystal 22 by the lens 20. When the non-linear optical crystal 22 is irradiated with the second excitation light and the third excitation light having different wavelengths, a third terahertz wave corresponding to a difference frequency between the second excitation light and the third excitation light is generated. In this example, a wavelength of the third terahertz wave is 1.06 THz. The second excitation light and the third excitation light transmitted through the non-linear optical crystal 22 enter the damper 62, and are attenuated in the damper 62.

As described above, the terahertz light source of the present disclosure can simultaneously generate a plurality of terahertz waves, each of which is a continuous wave and has a different wavelength, by continuously oscillating the fiber lasers 10, 12, and 14.

Similarly to the fiber lasers 10, 12, and 14, the terahertz light source of the present disclosure has a feature that maintenance is easy and continuous operation can be performed with low power consumption. The terahertz light source of the present disclosure has advantages of being inexpensive, small, and stable as compared with a light source that generates a pulsed terahertz wave.

The terahertz light source of the present disclosure can generate three types of terahertz waves from three types of excitation light beams having different wavelengths by generating three sets of combinations of two types of excitation light beams from three types of excitation light beams having different wavelengths. That is, it is possible to obtain terahertz waves from a limited number of excitation light sources by the number of combinations thereof.

The terahertz light source of the disclosure also has an advantage that the number of excitation light sources can be reduced by reusing the transmitted excitation light transmitted through the non-linear optical crystal, and the number of excitation light sources to be used can be reduced as compared with a semiconductor method of generating one terahertz wave from one semiconductor laser.

The object identification device of the present disclosure can simultaneously irradiate the object with a plurality of terahertz waves using the terahertz light source of the present disclosure, thereby enabling identification of a plurality of substances at high speed and with high accuracy. That is, since the object is identified using the transmittance for a plurality of terahertz waves having different wavelengths, it is possible to perform high-speed identification as compared with the case of identifying the substance by measuring the spectral spectrum, and it is possible to perform highly accurate identification as in the identification by the spectral spectrum. As a result, the object identification device of the present disclosure can identify objects one after another at the same speed as the conveyance speed of the object.

In addition, the object identification device of the present disclosure can enjoy the advantages of the terahertz light source of the present disclosure as they are.

### [Second Embodiment]

Since the second embodiment is similar to the first embodiment except that the configuration of the terahertz light source is changed, only differences will be described.

The configuration of the terahertz light source is not limited to that illustrated in Fig. 7. As described above, the excitation light transmitted through the non-linear optical crystal is reused for excitation of another non-linear optical crystal. The excitation light transmitted through the non-linear optical crystal may be incident on the optical fiber again and transmitted, and may be reused for excitation of another non-linear optical crystal disposed at a distant position.

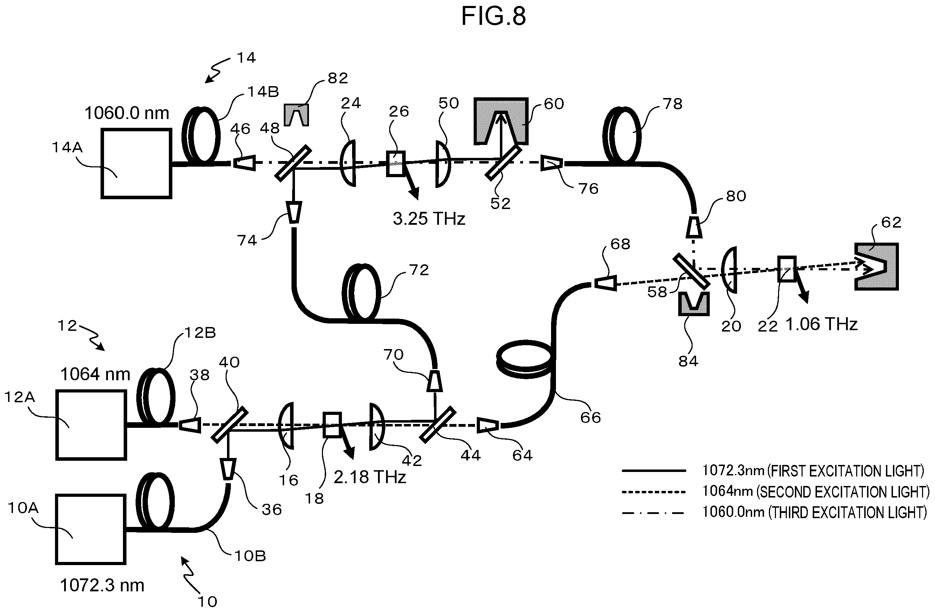

Fig. 8 is a schematic view illustrating another example of the configuration of the terahertz light source of the present disclosure. Since the main configuration of the terahertz light source illustrated in Fig. 8 is the same as that of the terahertz light source illustrated in Fig. 7, the same components are denoted by the same reference numerals, description thereof is omitted, and only differences will be described. First, the non-linear optical crystals 18, 22, and 26 are disposed at positions away from each other.

In the terahertz light source illustrated in Fig. 8, a collimator 70, an optical fiber 72, and a collimator 74 are inserted between a beam splitter 44 and a beam splitter 48, and a collimator 64, an optical fiber 66, and a collimator 68 are inserted between the beam splitter 44 and the beam splitter 58.

A collimator 76, an optical fiber 78, and a collimator 80 are inserted between the beam splitter 52 and the beam splitter 58 instead of the mirror 54 and the half-wave plate 56 of Fig. 7. Dampers 82 and 84 for absorbing stray light are added. The half-wave plate 56 is unnecessary because polarization cannot be maintained in a case in which the excitation light transmitted through the non-linear optical crystal is returned to the optical fiber again. When the polarization can be maintained, the half-wave plate 56 may be added to separate each excitation light.

In the terahertz light source illustrated in Fig. 8, the first excitation light reflected by the beam splitter 44 is collimated by the collimator 70 and enters one end of the optical fiber 72, transmitted by the optical fiber 72 and emitted from the other end of the optical fiber 72, and collimated by the collimator 74 and enters the beam splitter 48.

The second excitation light transmitted through the beam splitter 44 is collimated by the collimator 64 and enters one end of the optical fiber 66, transmitted by the optical fiber 66 and emitted from the other end of the optical fiber 66, and collimated by the collimator 68 and enters the beam splitter 58.

The third excitation light transmitted through the beam splitter 52 is collimated by the collimator 76 and incident on one end of the optical fiber 78, transmitted by the optical fiber 78 and emitted from the other end of the optical fiber 78, and collimated by the collimator 80 and enters the beam splitter 58.

According to the second embodiment, the same effects as those of the first embodiment can be obtained. According to the second embodiment, when the excitation light transmitted through the non-linear optical crystal is reused, the transmitted light is incident on the optical fiber again and transmitted, so that the excitation light can be emitted at a position away from the incident position on the optical fiber. As a result, flexibility of layout when arranging each component is increased, and another non-linear optical crystal can be disposed at a distant position.

### [Third Embodiment]

Since the third embodiment is similar to the first and second embodiments except that a plurality of non-linear optical crystals are arranged side by side in an intersecting direction intersecting the conveyance direction, only differences will be described.

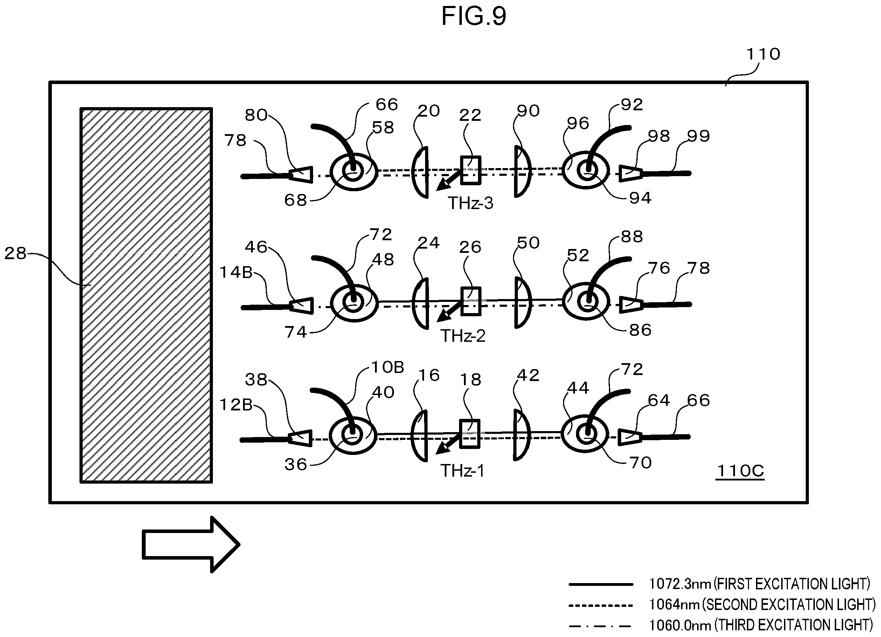

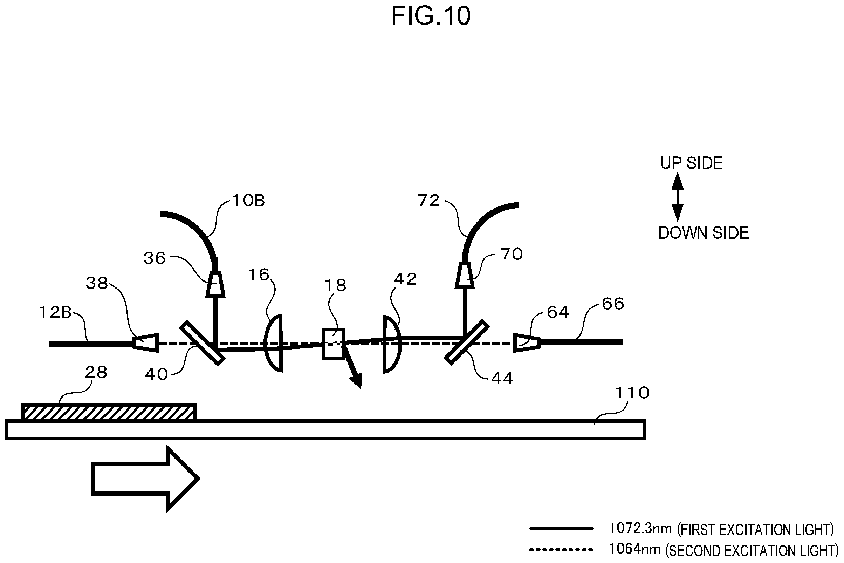

Fig. 9 is a plan view illustrating still another example of the configuration of the terahertz light source of the present disclosure. Fig. 10 is a side view of the terahertz light source illustrated in Fig. 9. In this example, a plurality of non-linear optical crystals, which are generation units of a plurality of terahertz waves, are arranged side by side in the intersecting direction intersecting the conveyance direction (indicated by an arrow) of the conveyance device 110 that conveys the object 28. For example, the non-linear optical crystals 18, 22, and 26 of the terahertz light source illustrated in Fig. 8 are arranged side by side in the intersecting direction.

By allowing the excitation light transmitted through the non-linear optical crystal to be incident on the optical fiber again and transmitting the excitation light, flexibility of layout when arranging each component is increased, and the arrangement illustrated in Figs. 9 and 10 becomes possible. Since the main configuration of the terahertz light source illustrated in Fig. 9 is the same as those of the terahertz light sources illustrated in Figs. 7 and 8, the same components are denoted by the same reference numerals, description thereof is omitted, and only differences will be described.

A unit including the non-linear optical crystal 18 illustrated in Fig. 10 will be described as an example. Here, a direction approaching the conveyance device 110 is referred to as "down", and a direction away from the conveyance device 110 is referred to as "up". In this unit, the collimator 38, the beam splitter 40, the lens 16, the non-linear optical crystal 18, the lens 42, the beam splitter 44, and the collimator 64 are arranged in the described order along the conveyance direction.

The beam splitters 40 and 44 are disposed in such a posture that the reflection surfaces thereof cross the perpendicular line of a surface 110C of the belt 110B of the conveyance device 110 at 45° and also cross the conveyance direction of the conveyance device 110 at 45°. The collimator 36 is disposed above the beam splitter 40, and the collimator 70 is disposed above the beam splitter 44.

In the unit illustrated in Fig. 10, the first excitation light emitted from one end of the optical fiber 10B of the fiber laser 10 is collimated by the collimator 36 and enters the beam splitter 40 from above, is reflected by the beam splitter 40 to the downstream side in the conveyance direction and enters the lens 16. In this regard, the second excitation light emitted from one end of the optical fiber 12B of the fiber laser 12 is collimated by the collimator 38 and enters the beam splitter 40 from the horizontal direction, is transmitted through the beam splitter 40 and enters the lens 16 on the downstream side in the conveyance direction.

The first excitation light and the second excitation light are focused into the non-linear optical crystal 18 by the lens 16. A second terahertz wave corresponding to a difference frequency between the first excitation light and the second excitation light is generated. The first excitation light and the second excitation light transmitted through the non-linear optical crystal 18 are focused by the lens 42 and enter the beam splitter 44 from the horizontal direction.

The first excitation light is reflected upward by the beam splitter 44 and enters the collimator 70, is collimated by the collimator 70 and incidents on one end of the optical fiber 72. The second excitation light transmits through the beam splitter 44 in the horizontal direction and enters the collimator 64 on the downstream side in the conveyance direction, is collimated by the collimator 64 and incidents on one end of the optical fiber 66.

In the unit including the non-linear optical crystal 26 illustrated in Fig. 9, similarly, the third excitation light emitted from one end of the optical fiber 14B of the fiber laser 14 enters the beam splitter 48 from the horizontal direction, and the first excitation light emitted from one end of the optical fiber 72 enters the beam splitter 48 from above. The third excitation light transmitted through the non-linear optical crystal 26 is transmitted through the beam splitter 52 in the horizontal direction, and the first excitation light transmitted through the non-linear optical crystal 26 is reflected upward by the beam splitter 52.

In the example illustrated in Fig. 8, the first excitation light reflected by the beam splitter 52 enters the damper 60, but in the example illustrated in Fig. 9, the first excitation light reflected by the beam splitter 52 incidents on the optical fiber 88 by the collimator 86 and reused.

Similarly in the unit including the non-linear optical crystal 22 illustrated in Fig. 9, the third excitation light emitted from one end of the optical fiber 78 enters the beam splitter 58 from the horizontal direction, and the second excitation light emitted from one end of the optical fiber 66 enters the beam splitter 58 from above.

In the example illustrated in Fig. 8, the second excitation light and the third excitation light transmitted through the non-linear optical crystal 22 enter the damper 62. However, in the example illustrated in Fig. 9, the second excitation light and the third excitation light transmitted through the non-linear optical crystal 22 are focused by the lens 90 and are irradiated to the beam splitter 96. The third excitation light is transmitted through the beam splitter 96 in the horizontal direction, is incident on the optical fiber 99 by the collimator 98, and is reused. The second excitation light is reflected upward by the beam splitter 96, is incident on the optical fiber 92 by the collimator 94, and is reused.

According to the third embodiment, the same effects as those of the first embodiment can be obtained. According to the third embodiment, it is possible to simultaneously irradiate the object conveyed by the conveyance device with a plurality of terahertz waves.

### [Fourth Embodiment]

Since the fourth embodiment is similar to the first embodiment except that the object identification device includes a pressing mechanism, only the difference will be described.

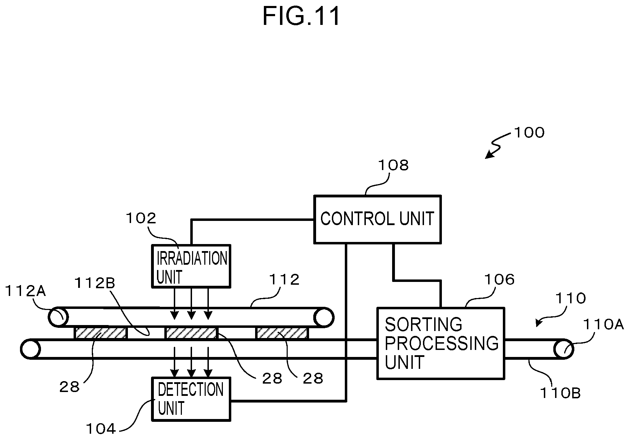

Fig. 11 is a schematic view illustrating a modification of the configuration of the object identification device of the present disclosure. In this example, the object identification device 100 includes a pressing mechanism 112 for pressing the object 28. Since the main configuration of the identification device illustrated in Fig. 11 is the same as that of the identification device illustrated in Fig. 2, the same components are denoted by the same reference numerals, description thereof is omitted, and only differences will be described.

Similarly to the conveyance device 110, the pressing mechanism 112 includes a pair of rollers 112A and a belt 112B. A length of the pressing mechanism 112 in the conveyance direction is shorter than a length of the conveyance device 110 in the conveyance direction. The pair of rollers 112A are driven by a motor (not illustrated), and the motor (not illustrated) is controlled by the control unit 108. Similarly to the belt 110B, the belt 112B is made of a material having high transparency to terahertz waves such as plastic.

The pressing mechanism 112 is disposed above the conveyance device 110, and presses the object 28 by sandwiching the object 28 between the surface of the belt 112B of the pressing mechanism 112 and the surface of the belt 110B of the conveyance device 110. As the belt 110B moves in the conveyance direction by the rotation of the rollers 110A of the conveyance device 110, the rollers 112A of the pressing mechanism 112 rotates to move the belt 112B. As a result, the object 28 is conveyed in a pressed state.

For example, since the object 28 such as waste plastic is provided in various forms, a distance from the object 28 to the detection unit 104 changes depending on the irradiation site, and interference of the terahertz wave occurs. When the interference of the terahertz wave occurs, the detection accuracy of the transmitted light or the reflected light decreases.

In the fourth embodiment, the object 28 is pressed by the pressing mechanism 112 to make the distance from the object 28 to the detection unit 104 constant, thereby avoiding interference which is a drawback peculiar to terahertz waves. As a result, as compared with a case where the pressing mechanism 112 is not provided, the detection accuracy of the transmitted light or the reflected light is improved, and the identification accuracy of the object is also improved.

### [Fifth Embodiment]

The fifth embodiment is similar to the first embodiment except that the irradiation unit and the detection unit are disposed on the same side with respect to the object and the reflection member is provided in the conveyance device, and thus only the difference will be described.

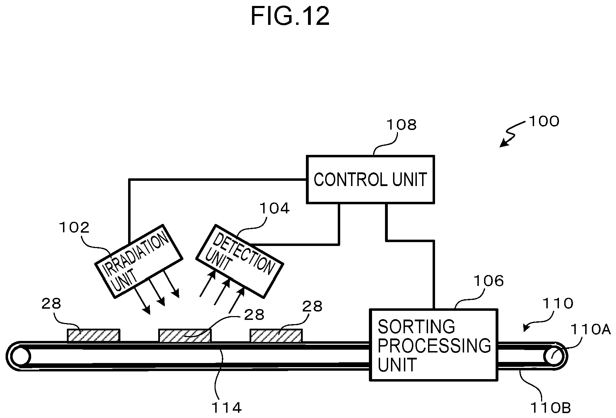

Fig. 12 is a schematic view illustrating another modification of the configuration of the object identification device of the present disclosure. In this example, the irradiation unit 102 and the detection unit 104 are disposed above the conveyance device 110. Since the main configuration of the identification device illustrated in Fig. 12 is the same as that of the identification device illustrated in Fig. 2, the same components are denoted by the same reference numerals, description thereof is omitted, and only differences will be described.

A reflection member 114 is provided on the back surface of the belt 110B of the conveyance device 110. The reflection member 114 is made of a material having high reflectance with respect to a terahertz wave, such as a metal such as gold, silver, or aluminum, or a semiconductor. The reflection member 114 can be in the form of a thin film.

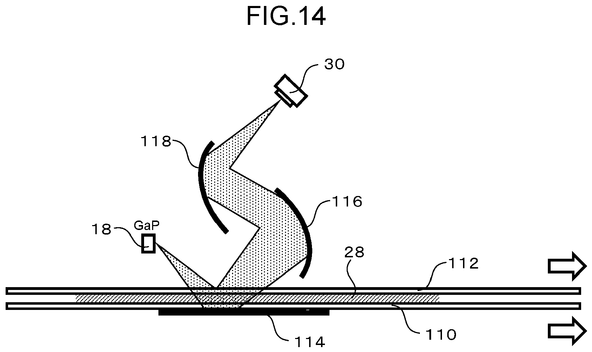

In the fifth embodiment, for example, as illustrated in Fig. 14, some of the terahertz wave irradiated from the non-linear optical crystal 18 included in the irradiation unit 102 is transmitted through the object 28, reflected by the reflection member 114 on the back surface of the belt 110B, transmitted through the object 28 again, and detected by the detector 30 included in the detection unit 104 disposed above the conveyance device 110.

According to the fifth embodiment, since the irradiation unit 102 and the detection unit 104 can be disposed on the same side with respect to the object 28, the entire object identification device 100 can be downsized. There is also an advantage that the transmitted light transmitted through the object 28 a plurality of times can be detected, and the detection accuracy of the transmittance and the identification accuracy of the substance are improved.

### [Modification]

The configurations of the substance identification device, the substance identification method, and the terahertz light source described in the above embodiments are merely examples, and it goes without saying that the configurations may be changed without departing from the spirit of the invention.

### (Optical System Other Than Light Source)

Hereinafter, modifications of the configuration of the optical system other than the light source will be described.

In the configuration illustrated in Fig. 2, an example has been described in which the irradiation unit 102 and the detection unit 104 are arranged symmetrically with the object 28 interposed therebetween, the terahertz wave emitted from the irradiation unit 102 is directly irradiated to the object 28 immediately below, and the transmitted light transmitted through the object 28 is directly detected by the detection unit 104 immediately below. However, the arrangement of the irradiation unit 102 and the detection unit 104, the optical path of the terahertz wave emitted from the irradiation unit 102, and the optical path of the transmitted light emitted from the object 28 may be appropriately changed.

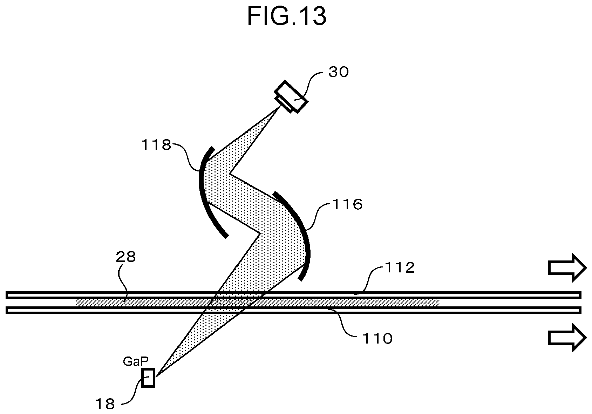

In the example illustrated in Figs. 13 to 17, the object 28 is sandwiched between the surface of the belt 112B of the pressing mechanism 112 and the surface of the belt 110B of the conveyance device 110. As the belt 110B and the belt 112B move in the conveyance direction indicated by the arrow, the object 28 also moves in the conveyance direction indicated by the arrow. The irradiation unit 102 is represented by "non-linear optical crystal 18", and the detection unit 104 is represented by "detector 30".

Fig. 13 is a schematic view illustrating an example of a configuration of an optical system other than a light source. In the example illustrated in Fig. 13, the non-linear optical crystal 18 is disposed below the conveyance device 110, and the detector 30 is disposed above the conveyance device 110. Parabolic mirrors 116 and 118 for changing the optical path of the terahertz wave transmitted through the object 28 and guiding the terahertz wave to the detector 30 are disposed above the conveyance device 110. In this example, the terahertz wave emitted from the non-linear optical crystal 18 is transmitted through the object 28, reflected by the parabolic mirrors 116 and 118, and enters the detector 30.

Fig. 14 is a schematic view illustrating another example of the configuration of the optical system other than the light source. In the example illustrated in Fig. 14, the non-linear optical crystal 18 and the detector 30 are disposed above the conveyance device 110. Parabolic mirrors 116 and 118 for changing the optical path of the terahertz wave transmitted through the object 28 and guiding the terahertz wave to the detector 30 are disposed above the conveyance device 110. A reflection member 114 is provided on the back surface of the belt 110B of the conveyance device 110.

In this example, the terahertz wave emitted from the non-linear optical crystal 18 is transmitted through the object 28, reflected by the reflection member 114, transmitted through the object 28 again, reflected by the parabolic mirrors 116 and 118, and enters the detector 30.

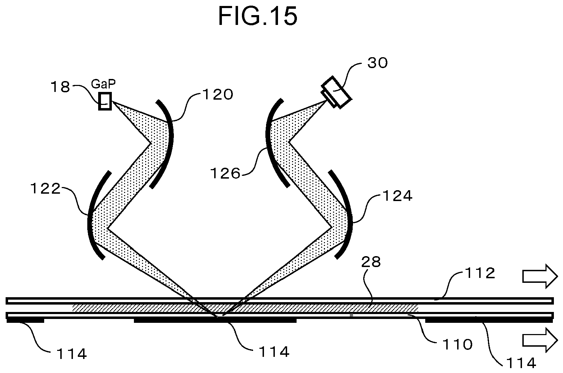

Fig. 15 is a schematic view illustrating another example of the configuration of the optical system other than the light source. In the example illustrated in Fig. 15, the non-linear optical crystal 18 and the detector 30 are disposed above the conveyance device 110. Parabolic mirrors 120 and 122 for changing the optical path of the terahertz wave emitted from the non-linear optical crystal 18 and guiding the terahertz wave to the object 28, and parabolic mirrors 124 and 126 for changing the optical path of the terahertz wave transmitted through the object 28 and guiding the terahertz wave to the detector 30 are disposed above the conveyance device 110. A reflection member 114 is provided on the back surface of the belt 110B of the conveyance device 110.

In this example, the terahertz wave emitted from the non-linear optical crystal 18 is reflected by the parabolic mirrors 120 and 122 and irradiated to the object 28. The terahertz wave transmitted through the object 28 is reflected by the reflection member 114, transmitted through the object 28 again, reflected by the parabolic mirrors 124 and 126, and enters the detector 30.

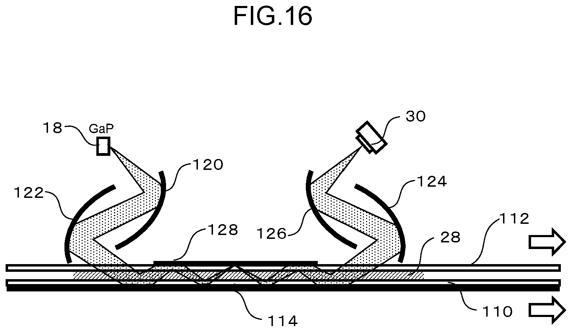

Fig. 16 is a schematic view illustrating another example of the configuration of the optical system other than the light source. In addition to the configuration illustrated in Fig. 15, a reflection member 128 is provided above the pressing mechanism 112. A length of the reflection member 128 in the conveyance direction is shorter than a length of the reflection member 114 in the conveyance direction.

In this example, the terahertz wave emitted from the non-linear optical crystal 18 is reflected by the parabolic mirrors 120 and 122 and irradiated to the object 28. The terahertz wave transmitted through the object 28 propagates along the conveyance direction while being reflected between the reflection member 114 and the reflection member 128, and is transmitted through the object 28 many times. Finally, the terahertz wave reflected by the reflection member 114 is reflected by the parabolic mirrors 124 and 126 and enters the detector 30.

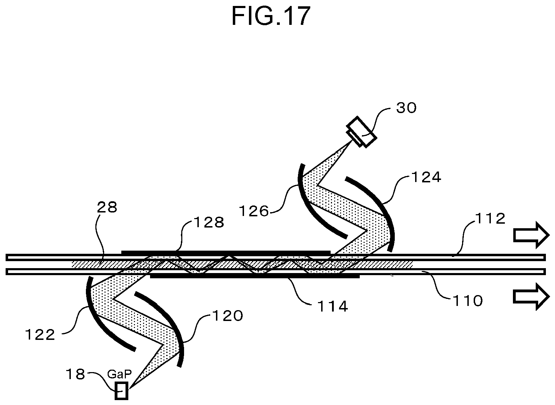

Fig. 17 is a schematic view illustrating another example of the configuration of the optical system other than the light source. In the example illustrated in Fig. 17, unlike Fig. 16, the non-linear optical crystal 18 is disposed below the conveyance device 110, and the parabolic mirrors 120 and 122 are also disposed below the conveyance device 110. The reflection member 128 is provided above the pressing mechanism 112. The length of the reflection member 128 in the conveyance direction is substantially equal to the length of the reflection member 114 in the conveyance direction.

In this example, similarly to the example illustrated in Fig. 16, the terahertz wave transmitted through the object 28 propagates along the conveyance direction while being reflected between the reflection member 114 and the reflection member 128, and transmits through the object 28 many times. However, the number of times the terahertz wave is transmitted through the object 28 increases as the length of the reflection member 128 in the conveyance direction is longer.

As described above, by disposing the non-linear optical crystal 18 (that is, the irradiation unit 102) and the detector 30 (that is, the detection unit 104) on the same side with respect to the object 28, the entire object identification device 100 can be downsized. As the number of times of transmitting the object 28 increases, the detection accuracy of the transmittance and the identification accuracy of the substance are improved.

### <Other Modifications>

In the present embodiment, a substance identification device and a substance identification method using a terahertz light source of the present disclosure that generate a terahertz wave by a difference frequency generation method have been described. However, it is sufficient that a plurality of terahertz waves having different wavelengths can be simultaneously generated, and the terahertz wave is not limited to the terahertz wave generated by the difference frequency generation method. The terahertz wave is not limited to a continuous wave.

For example, a plurality of terahertz waves may be simultaneously generated by combining a plurality of terahertz light sources. As the terahertz light source, a quantum cascade laser, a semiconductor laser, a TUNNETT (tunnel injection transit time) diode, an IMPATT (impact ionization avalanche transit-time) diode, a gunn diode, a resonant tunneling diode, a photoconductive antenna, a uni-traveling carrier photodiode (UTC-PD), or the like can be used.

In the present embodiment, a substance identification device and a substance identification method using a terahertz light source of the present disclosure that generate a terahertz wave that is a continuous wave have been described, but the terahertz wave is not limited to the continuous wave. It is sufficient that a plurality of terahertz waves having different wavelengths can be simultaneously generated, and for example, a pulse wave can also be used.

The substance identification device and the substance identification method of the present invention can be applied not only to identification of waste plastics but also to a wide range of applications requiring the identification of substances. For example, the substance identification device and the substance identification method of the present invention are also applicable to quality control of plastic products.

A first aspect of the disclosure is a substance identification device including: an irradiation unit that irradiates an object with a plurality of terahertz waves having different wavelengths at one time; a detection unit that detects the plurality of terahertz waves transmitted through the object or reflected by the object; and an identification unit that identifies a substance constituting the object from at least one of transmittance or reflectance for each of the plurality of terahertz waves.

A second aspect of the disclosure is the substance identification device according to the first aspect, in which the plurality of terahertz waves are continuous waves.

A third aspect of the disclosure is the substance identification device according to the first aspect or the second aspect, in which the irradiation unit generates a terahertz wave by a difference frequency generation method using a non-linear optical crystal.

A fourth aspect of the disclosure is the substance identification device according to any one of the first aspect to the third aspect, in which the irradiation unit includes a plurality of non-linear optical crystals, and a plurality of fiber lasers having different oscillation wavelengths, in which a number of combinations in a case in which two fiber lasers are selected from the plurality of fiber lasers is equal to or larger than a number of the plurality of non-linear optical crystals, wherein the irradiation unit irradiates each of the plurality of non-linear optical crystals with two types of laser light beams having different wavelengths from fiber lasers of a corresponding combination, and simultaneously generates a plurality of terahertz waves having different wavelengths from the plurality of non-linear optical crystals by a difference frequency generation method.

A fifth aspect of the disclosure is the substance identification device according to the third aspect or the fourth aspect, in which the non-linear optical crystal is a GaP crystal.

A sixth aspect of the disclosure is the substance identification device according to the fourth aspect or the fifth aspect, in which the irradiation unit is configured to irradiate another non-linear optical crystal with laser light beams transmitted through one non-linear optical crystal.

A seventh aspect of the disclosure is the substance identification device according to the fourth aspect or the fifth aspect, in which the irradiation unit is configured to transmit laser light beams transmitted through one non-linear optical crystal to another non-linear optical crystal using an optical fiber.

An eighth aspect of the disclosure is the substance identification device according to any one of the first aspect to the seventh aspect, further including a conveyance device that conveys the object, in which the irradiation unit simultaneously irradiates the object conveyed by the conveyance device with the plurality of terahertz waves.

A ninth aspect of the disclosure is the substance identification device according to the eighth aspect, in which the plurality of non-linear optical crystals of the irradiation unit are arranged side by side in an intersecting direction intersecting a conveyance direction of the conveyance device, and the irradiation unit simultaneously irradiates the object conveyed by the conveyance device with a plurality of terahertz waves from the plurality of non-linear optical crystals.

A tenth aspect of the disclosure is the substance identification device according to any one of the first aspect to the ninth aspect, in which the identification unit compares a feature of an optical characteristic of at least one of transmittance or reflectance of a known substance at each wavelength of a plurality of terahertz waves having different wavelengths with a feature of a corresponding optical characteristic of the object to identify a substance constituting the obj ect.

An eleventh aspect of the disclosure is the substance identification device according to any one of the first aspect to the tenth aspect, further including a pressing mechanism that presses the object, in which the irradiation unit simultaneously irradiates the object pressed by the pressing mechanism with the plurality of terahertz waves.

A twelfth aspect of the disclosure is the substance identification device according to any one of the first aspect to the eleventh aspect, further including a reflection member that reflects each of a plurality of terahertz waves transmitted through the object, in which the detection unit detects the plurality of terahertz waves reflected by the reflection member and transmitted a plurality of times through the object.

A thirteenth aspect of the disclosure is a substance identification method including: irradiating an object with a plurality of terahertz waves having different wavelengths at one time; detecting the plurality of terahertz waves transmitted through the object or reflected by the object; and identifying a substance constituting the object from at least one of transmittance or reflectance for each of the plurality of terahertz waves.

A fourteenth aspect of the disclosure is a terahertz light source including: a plurality of non-linear optical crystals; and a plurality of fiber lasers having different oscillation wavelengths, in which a number of combinations in a case in which two fiber lasers are selected from the plurality of fiber lasers is equal to or larger than a number of the plurality of non-linear optical crystals, in which terahertz light source irradiates each of the plurality of non-linear optical crystals with two types of laser light beams having different wavelengths from fiber lasers of a corresponding combination, and simultaneously generates a plurality of terahertz waves having different wavelengths from the plurality of non-linear optical crystals.

A fifteenth aspect of the disclosure is the terahertz light source according to the fourteenth aspect, further including: for each of the plurality of non-linear optical crystals, two fiber lasers of a corresponding combination; a condenser lens that focuses two types of laser light beams having different wavelengths emitted from the two fiber lasers and causes the focused laser light beams to enter a non-linear optical crystal; and a beam splitter that separates the two types of laser light beams having different wavelengths transmitted through the non-linear optical crystal, in which the terahertz light source causes the laser light beams separated by the beam splitter to enter a non-linear optical crystal different from the non-linear optical crystal through which the laser light beam has been transmitted.

A sixteenth aspect of the disclosure is the terahertz light source of the fifteenth aspect, in which the terahertz light source causes the laser light beams separated by the beam splitter to enter an optical fiber, transmits the laser light beams in the optical fiber, and causes the laser light beams to enter a non-linear optical crystal different from the non-linear optical crystal through which the laser light beam has been transmitted.

## Claims

1. A substance identification device, comprising:
an irradiation unit that irradiates an object with a plurality of terahertz waves having different wavelengths, at one time;
a detection unit that detects the plurality of terahertz waves transmitted through the object or reflected by the object; and
an identification unit that identifies a substance constituting the object from at least one of transmittance or reflectance for each of the plurality of terahertz waves.

2. The substance identification device according to claim 1, wherein the plurality of terahertz waves are continuous waves.

3. The substance identification device according to claim 1 or 2, wherein the irradiation unit generates a terahertz wave by a difference frequency generation method using a non-linear optical crystal.

4. The substance identification device according to any one of claims 1 to 3, wherein the irradiation unit includes:
a plurality of non-linear optical crystals, and
a plurality of fiber lasers having different oscillation wavelengths, in which a number of combinations, in a case in which two fiber lasers are selected from the plurality of fiber lasers, is equal to or larger than a number of the plurality of non-linear optical crystals,
wherein the irradiation unit irradiates each of the plurality of non-linear optical crystals with two types of laser light beams having different wavelengths from fiber lasers of a corresponding combination, and simultaneously generates a plurality of terahertz waves having different wavelengths from the plurality of non-linear optical crystals by a difference frequency generation method.

5. The substance identification device according to claim 3 or 4, wherein the non-linear optical crystal is a GaP crystal.

6. The substance identification device according to claim 4 or 5, wherein the irradiation unit is configured to irradiate another non-linear optical crystal with laser light beams transmitted through one non-linear optical crystal.

7. The substance identification device according to claim 4 or 5, wherein the irradiation unit is configured to transmit laser light beams transmitted through one non-linear optical crystal to another non-linear optical crystal using an optical fiber.

8. The substance identification device according to any one of claims 1 to 7, further comprising a conveyance device that conveys the object, wherein the irradiation unit simultaneously irradiates the object conveyed by the conveyance device with the plurality of terahertz waves.

9. The substance identification device according to claim 8, wherein the plurality of non-linear optical crystals of the irradiation unit are arranged side by side in an intersecting direction intersecting a conveyance direction of the conveyance device, and the irradiation unit simultaneously irradiates the object conveyed by the conveyance device with a plurality of terahertz waves from the plurality of non-linear optical crystals.

10. The substance identification device according to any one of claims 1 to 9, wherein the identification unit compares a feature of an optical characteristic of at least one of transmittance or reflectance of a known substance at each wavelength of a plurality of terahertz waves having different wavelengths with a feature of a corresponding optical characteristic of the object to identify a substance constituting the object.

11. The substance identification device according to any one of claims 1 to 10, further comprising a pressing mechanism that presses the object, wherein the irradiation unit simultaneously irradiates the object pressed by the pressing mechanism with the plurality of terahertz waves.

12. The substance identification device according to any one of claims 1 to 11, further comprising a reflection member that reflects each of a plurality of terahertz waves transmitted through the object, wherein the detection unit detects the plurality of terahertz waves reflected by the reflection member and transmitted a plurality of times through the object.

13. A substance identification method, comprising:
irradiating an object with a plurality of terahertz waves having different wavelengths, at one time;
detecting the plurality of terahertz waves transmitted through the object or reflected by the object; and
identifying a substance constituting the object from at least one of transmittance or reflectance for each of the plurality of terahertz waves.

14. A terahertz light source, comprising:
a plurality of non-linear optical crystals; and
a plurality of fiber lasers having different oscillation wavelengths, in which a number of combinations, in a case in which two fiber lasers are selected from the plurality of fiber lasers, is equal to or larger than a number of the plurality of non-linear optical crystals,
wherein the terahertz light source irradiates each of the plurality of non-linear optical crystals with two types of laser light beams having different wavelengths from fiber lasers of a corresponding combination, and simultaneously generates a plurality of terahertz waves having different wavelengths from the plurality of non-linear optical crystals.

15. The terahertz light source according to claim 14, further comprising, for each of the plurality of non-linear optical crystals,
two fiber lasers of a corresponding combination; a condenser lens that focuses two types of laser light beams having different wavelengths emitted from the two fiber lasers and causes the focused laser light beams to enter a non-linear optical crystal; and
a beam splitter that separates the two types of laser light beams having different wavelengths transmitted through the non-linear optical crystal,
wherein the terahertz light source causes the laser light beams separated by the beam splitter to enter a non-linear optical crystal different from the non-linear optical crystal through which the laser light beam has been transmitted.

16. The terahertz light source according to claim 15, wherein the terahertz light source causes the laser light beams separated by the beam splitter to enter an optical fiber, transmits the laser light beams in the optical fiber, and causes the laser light beams to enter a non-linear optical crystal different from the non-linear optical crystal through which the laser light beam has been transmitted.
